(19) Europäisches Patentamt
European Patent Office
Office européen des brevets

(11) **EP 3 299 844 A1**

(12) **EUROPÄISCHE PATENTANMELDUNG**

(43) Veröffentlichungstag:
28.03.2018 Patentblatt 2018/13

(51) Int Cl.:
*G01S 15/93* [(2006.01)]   *G01S 7/539* [(2006.01)]
*G01S 15/58* [(2006.01)]   *G01S 15/66* [(2006.01)]
*G01S 15/87* [(2006.01)]

(21) Anmeldenummer: 17186661.9

(22) Anmeldetag: **17.08.2017**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(30) Priorität: **21.09.2016 DE 102016218064**

(71) Anmelder: **Robert Bosch GmbH**
**70442 Stuttgart (DE)**

(72) Erfinder:
• **Pampus, Christian**
**71229 Leonberg (DE)**
• **Kempf, Ralf**
**73430 Aalen (DE)**
• **Schmidt, Juergen**
**71106 Magstadt (DE)**
• **Reimann, Tom**
**73266 Bissingen An Der Teck (DE)**
• **Herzer, Benjamin**
**70178 Stuttgart (DE)**
• **Schumann, Michael**
**70597 Stuttgart (DE)**

(54) **BETRIEBSVERFAHREN FÜR EIN ULTRASCHALLSENSORSYSTEM, STEUEREINRICHTUNG, ULTRASCHALLSENSORSYSTEM UND FAHRZEUG**

(57) Die vorliegende Erfindung betrifft ein Betriebsverfahren für ein Ultraschallsensorsystem (10), insbesondere zur Erfassung der Umgebung (2) eines Fahrzeugs (1) mittels Ultraschall, mit Schritten des Aussendens von Ultraschallsignalen (20) zu einer Mehrzahl aufeinanderfolgender Zeitpunkte und des Empfangens von - insbesondere an einem oder an mehreren Objekten (3) in der Umgebung (2) - reflektierten Ultraschallechosignalen (30), wobei einem - zu einem ausgesandten Ultraschallsignal (20) - empfangenem Ultraschallechosignal (30) eine Spur (31) zugeordnet wird, insbesondere eine gemessene Schallintensität als Funktion der Zeit, in einer jeweiligen Spur (31) zu einem jeweils vorhandenen Ultraschallecho (32) ein Distanzwert (33) bestimmt und zugeordnet wird, Ultraschallechos (32) in Spuren (31) zu einer Mehrzahl zeitlich aufeinanderfolgender Ultraschallsignale (20) zu einer Gruppe (35) zusammengefasst werden, falls die Distanzwerte der Ultraschallechos (32) einer vorbestimmten Gesetzmäßigkeit folgen, und Ultraschallechos (36), die zu keiner Gruppe (35) gehören, als Störung (34) klassifiziert werden.

**Fig. 1**

EP 3 299 844 A1

**Beschreibung**

Stand der Technik

Die vorliegende Erfindung betrifft ein Betriebsverfahren für ein Ultraschallsensorsystem, insbesondere zur Erfassung der Umgebung eines Fahrzeugs mittels Ultraschall, eine Steuereinrichtung zum Steuern des Betriebs eines Ultraschallsensorsystems, ein Ultraschallsensorsystem als solches sowie ein Fahrzeug, welches mit einem Ultraschallsensorsystem ausgestattet ist.

Im Bereich der Fahr- und Parkassistenzsysteme für Fahrzeuge finden Ultraschallsensorsysteme zur Erfassung der Fahrzeugumgebung weite Verbreitung. Problematisch bei herkömmlichen Ultraschallsensorsystemen ist deren Störanfälligkeit gegenüber schlecht reflektierenden Objekten und/oder gegenüber Objekten in Bewegung. Auch ist die Diskriminierung von objektbasierten Ultraschallechos gegenüber Störsignalen problematisch. Dies liegt an bisher gängigen Auswertekonzepten, die mit festen Amplitudenschwellwerten arbeiten.

Offenbarung der Erfindung

Das erfindungsgemäße Betriebsverfahren für ein Ultraschallsensorsystem mit den Merkmalen des unabhängigen Anspruches 1 weist demgegenüber den Vorteil auf, dass ohne strukturellen und/oder konstruktiven Mehraufwand eine verbesserte Detektionsleistung erzielt wird. Dies wird erfindungsgemäß mit den Merkmalen des unabhängigen Anspruches 1 dadurch erreicht, dass ein Betriebsverfahren für ein Ultraschallsensorsystem geschaffen wird, insbesondere zur Erfassung der Umgebung eines Fahrzeugs mittels Ultraschall, welches die Schritte aufweist des Aussendens von Ultraschallsignalen zu einer Mehrzahl aufeinanderfolgender Zeitpunkte und des Empfangens von - insbesondere an einem oder an mehreren Objekten in der Umgebung - reflektierten Ultraschallechosignalen. Dabei wird einem - zu einem ausgesandten Ultraschallsignal - empfangenen Ultraschallechosignal eine Spur zugeordnet, insbesondere nach Art einer gemessenen Schallintensität als Funktion der Zeit. Ferner wird in einer jeweiligen Spur zu einem jeweils vorhandenen Ultraschallecho ein Distanzwert bestimmt und zugeordnet. Es werden Ultraschallechos in Spuren zu einer Mehrzahl zeitlich aufeinanderfolgender Ultraschallsignale oder Ultraschallpulse zu einer Gruppe zusammengefasst, falls die Distanzwerte der Ultraschallechos einer vorbestimmten Gesetzmäßigkeit folgen. Ferner werden Ultraschallechos, die zu keiner Gruppe gehören, also der vorbestimmten Gesetzmäßigkeit nicht folgen, als Störung klassifiziert. Erfindungsgemäß werden also Ultraschallechos zu zeitlich aufeinanderfolgenden Ultraschallpulsen, die in ihrem zeitlichen Verlauf oder in ihrer zeitlichen Abfolge in Relation zu den sie erzeugenden aufeinanderfolgenden Ultraschallpulsen der vorbestimmten Gesetzmäßigkeit nicht genügen, als Störung verworfen, wogegen Ultraschallechos zu aufeinanderfolgenden Ultraschallpulsen, die auf Grund der vorgegebenen Gesetzmäßigkeit in ihrem zeitlichen Verlauf zu einer Gruppe klassifiziert werden können, als von einem Objekt in der Umgebung stammend klassifiziert werden.

Die Unteransprüche zeigen bevorzugte Weiterbildungen der Erfindung.

Die Genauigkeit des erfindungsgemäßen Betriebsverfahrens lässt sich weiter steigern, wenn gemäß einer bevorzugten Ausgestaltungsform ein jeweiliger Distanzwert unter Berücksichtigung einer Eigenbewegung eines zu Grunde liegenden Ultraschallsenders des Ultraschallsensorsystems und insbesondere des mit dem Ultraschallsensorsystem ausgestatteten zu Grunde liegenden Fahrzeugs bestimmt oder ermittelt wird.

Grundsätzlich lassen sich sämtliche Gesetzmäßigkeiten zur Bewertung der Distanzwerte zu den jeweiligen Ultraschallechos zur Auswertung heranziehen.

Dabei können aber insbesondere bestimmte Bewegungsmodelle herangezogen werden, die die Relativbewegung zwischen einem Fahrzeug, welches ein Ultraschallsensorsystem trägt, und den Objekten der Umgebung beschreiben.

Bei einer bevorzugten Ausgestaltungsform des erfindungsgemäßen Betriebsverfahrens ist es daher vorgesehen, dass die vorbestimmte Gesetzmäßigkeit definiert ist durch einen linearen Zusammenhang zwischen einem jeweiligen Distanzwert und einer vom Ultraschallsensorsystem und insbesondere vom zu Grunde liegenden Fahrzeug zurückgelegten Wegstrecke, insbesondere gemäß der nachfolgenden Gleichung (I)

$$\Delta d = a \cdot \Delta s \, , \qquad\qquad\qquad (I)$$

wobei $\Delta d$ die Differenz von Distanzwerten d zu verschiedenen Zeitpunkten oder Spuren, $\Delta s$ die Differenz der zurückgelegten Wegstrecke s zu diesen verschiedenen Zeitpunkten oder Spuren und a eine Konstante bezeichnen, insbesondere beim Vorliegen von mindestens zwei Ultraschallechos in einer Gruppe und/oder in einer Spur.

Alternativ oder zusätzlich kann es vorgesehen sein, dass die vorbestimmte Gesetzmäßigkeit definiert ist durch einen quadratischen Zusammenhang zwischen einem jeweiligen Distanzwert und einer vom Ultraschallsensorsystem und insbesondere vom zu Grunde liegenden Fahrzeug zurückgelegten Wegstrecke, insbesondere gemäß der nachfolgenden Gleichung (II)

$$d^2 = \left(s - s_0\right)^2 + d_0{}^2, \qquad\qquad (II)$$

wobei d den Distanzwert, d0 einen minimalen Abstand zu einem Objekt, s die zurückgelegte Wegstrecke und $s_0$ die zurückgelegte Wegstrecke zu einem Zeitpunkt des Passierens des Objekts bezeichnen, insbesondere beim Vorliegen von mehr als zwei Ultraschallechos in einer Gruppe und/oder in einer Spur.

Neben diesen konkreten Zusammenhängen mit Bezugnahme auf geometrische Aspekte zwischen Ultraschallsensorsystem und Objekten der Umgebung können auch andere und allgemeinere Zusammenhänge bei der Bewertung der Ultraschallechos zu Grunde gelegt werden.

So ist es bei einer anderen Ausgestaltungsform des erfindungsgemäßen Betriebsverfahrens vorgesehen, dass die vorbestimmte Gesetzmäßigkeit definiert ist durch einen Korrelationszusammenhang von Ultraschallechos und/oder durch eine Ähnlichkeit der Reflexion oder Reflexivität im Zusammenhang mit Ultraschallechos.

Zusätzlich oder alternativ kann die vorbestimmte Gesetzmäßigkeit definiert sein durch einen Korrelationszusammenhang von Ultraschallechos über eine Filterfunktion, insbesondere auf der Grundlage eines diskreten Kalmanfilters und/oder beim Vorliegen von mehr als zwei Ultraschallechos in einer Spur.

Wichtig für das erfindungsgemäße Betriebsverfahren ist die Vergleichbarkeit der Merkmale in den einzelnen Spuren der Ultraschallechosignale, die zu zeitlich unterschiedlichen Ultraschallsignalen als Sendesignalen gehören, um deren Gruppierung und zeitlichen Verlauf zu gewährleisten.

So ist es gemäß einer anderen vorteilhaften Weiterbildung des erfindungsgemäßen Betriebsverfahrens vorgesehen, dass zur Bewertung jeweiliger Echosignale, Spuren, Ultraschallechos, Distanzwerte und/oder Gruppen von Ultraschallechos, insbesondere zu verschiedenen Zeitpunkten und/oder zu verschiedenen Sendepulsen des zu Grunde liegenden Ultraschallsignals, ein Fangfenster definiert und verwendet wird.

Beim Auftreten mehrerer Kandidaten für Ultraschallechos, die in einer Spur zu einem empfangenen Ultraschallechosignal gegebenen Gruppe hinzugefügt werden können, ist die entsprechende Auswahl von besonderer Relevanz. Dabei können verschiedene Kriterien zu Rate gezogen werden.

Bei einer vorteilhaften Ausführungsform des erfindungsgemäßen Betriebsverfahrens ist es daher vorgesehen, dass in einer Spur eines empfangenen Ultraschallechosignals zu einem später ausgesandten Ultraschallsignal oder Sendepuls, insbesondere unter Einbeziehung einer Eigenbewegung des zu Grunde liegenden Ultraschallsensorsystems und/oder des zu Grunde liegenden Fahrzeugs, in einem Fangfenster nach möglichen Ultraschallechos gesucht wird, welche Ultraschallechos in einer Spur eines empfangenen Ultraschallechosignals zu einem früher ausgesandten Ultraschallsignal oder Sendepuls bestätigen, wobei insbesondere ein Ultraschallecho bestimmt und verwendet wird, welches dem vorangehenden Ultraschallecho am nächsten kommt.

Alternativ oder zusätzlich kann es vorgesehen sein, dass zur Bewertung einer Spur eines empfangenen Ultraschallechosignals zu einem später ausgesandten Ultraschallsignal oder Sendepuls für den späteren Zeitpunkt ein bereits definiertes Fangfenster verwendet wird, um unter Verwendung der vorbestimmten Gesetzmäßigkeit für eine gegebene Gruppe für den späteren Zeitpunkt eine Lage eines zukünftigen Ultraschallechos vorherzusagen, und dasjenige Ultraschallecho in der Spur des Ultraschallechosignals zum späteren Zeitpunkt zur jeweiligen Gruppe hinzugefügt wird, welches der vorhergesagten Lage des zukünftigen Ultraschallechos am nächsten kommt.

Bei dem erfindungsgemäßen Vorgehen kann für die betreffende Wahl die Breite oder Weite des Fangfensters von maßgeblicher Bedeutung sein.

Entsprechend kann bei bestimmten Ausführungsformen das Fangfenster eine festgesetzte Weite aufweisen.

Bei anderen Anwendungen kann aber ein variabel anpassbares Fangfenster ausgebildet sein.

So ist es gemäß einer Weiterbildung des erfindungsgemäßen Betriebsverfahrens alternativ oder zusätzlich vorgesehen, dass ein jeweiliges Fangfenster über einen Tiefpassfilter an eine mittlere Abweichung zwischen einer vorhergesagten Lage eines zukünftigen Ultraschallechos und einer tatsächlichen Lage eines in einer Gruppe oder einer Trace aufgenommenen Ultraschallechos in einer Spur eines Ultraschallechosignals angepasst wird.

Dabei kann unter einer Gruppe vorangehend und nachfolgend im Sinne der vorliegenden Erfindung auch eine so genannte Trace verstanden werden. Es handelt sich dabei jeweils um eine Zusammenfassung von Ultraschallechos in Echosignalen oder Empfangssignalen zu zeitlich voneinander beabstandeten Ultraschallsignalen als Sendesignalen oder zu deren zeitlich beabstandeten Pulsen als Sendepulse. Auf jeden Fall ist für eine entsprechende Zusammenfassung der Echosignale zu einer Gruppe oder Trace erfindungsgemäß die jeweils zu Grunde gelegte vorbestimmte Gesetzmäßigkeit maßgeblich.

Ferner betrifft die vorliegende Erfindung eine Steuervorrichtung zum Steuern des Betriebs eines Ultraschallsensorsystems, insbesondere zur Erfassung der Umgebung eines Fahrzeugs mittels Ultraschall.

Die erfindungsgemäße Steuereinrichtung ist zur Ausführung des erfindungsgemäßen Betriebsverfahrens ausgebildet und weist dazu entsprechende Mittel auf.

Ferner ist Gegenstand der vorliegenden Erfindung ein Ultraschallsystem, insbesondere zur Erfassung der Umgebung eines Fahrzeugs mittels Ultraschall.

Das erfindungsgemäße Ultraschallsystem weist einen Ultraschallsender zur Erzeugung und zum Aussenden von Ultraschallsignalen, insbesondere in Pulsform, und einen Ultraschallempfänger zum Empfangen von Ultraschallechosignalen und insbesondere von an einem oder an mehreren Objekten in der Umgebung reflektierten Ultraschallsignalen auf.

Gemäß der vorliegenden Erfindung weist das Sensorsystem des Weiteren eine Steuereinrichtung auf, die erfindungsgemäß ausgebildet ist und dazu dient, den Betrieb des Ultraschallsensorsystems, insbesondere gemäß dem erfindungsgemäßen Betriebsverfahren, zu steuern.

Gemäß einem weiteren Aspekt der vorliegenden Erfindung wird ein mit dem erfindungsgemäßen Ultraschallsensorsystem ausgestattetes Fahrzeug geschaffen.

Kurzbeschreibung der Figuren

Unter Bezugnahme auf die beigefügten Figuren werden Ausführungsformen der Erfindung im Detail beschrieben.

Figur 1    zeigt in schematischer Form ein erfindungsgemäß ausgestaltetes Fahrzeug unter Verwendung einer Ausführungsform des erfindungsgemäßen Ultraschallsensorsystems, welches auf der Grundlage des vorgestellten Betriebsverfahrens steuerbar ist.

Figur 2    zeigt nach Art eines Graphen Signale, die der Bewertung beim erfindungsgemäßen Betriebsverfahren zu Grunde gelegt sowie bei der Auswertung abgeleitet werden können.

Figur 3    zeigt in schematischer Form geometrische Aspekte, die der Bewertung durch eine Ausführungsform des erfindungsgemäßen Betriebsverfahrens zu Grunde gelegt werden können.

Bevorzugte Ausführungsformen der Erfindung

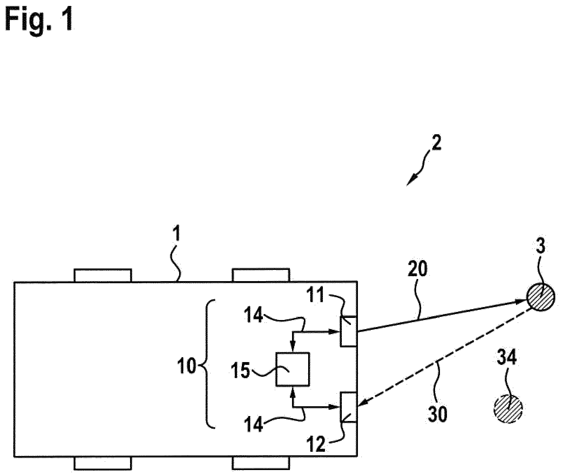

Nachfolgend werden unter Bezugnahme auf die Figuren 1 bis 3 Ausführungsbeispiele und der technische Hintergrund der Erfindung im Detail beschrieben. Gleiche und äquivalente sowie gleich oder äquivalent wirkende Elemente und Komponenten werden mit denselben Bezugszeichen bezeichnet. Nicht in jedem Fall ihres Auftretens wird die Detailbeschreibung der bezeichneten Elemente und Komponenten wiedergegeben.

Die dargestellten Merkmale und weiteren Eigenschaften können in beliebiger Form voneinander isoliert und beliebig miteinander kombiniert werden, ohne den Kern der Erfindung zu verlassen.

Figur 1 zeigt in schematischer Draufsicht ein erfindungsgemäß ausgestaltetes Fahrzeug 1, z.B. nach Art eines Personenkraftwagens, welches mit einer Ausführungsform des erfindungsgemäßen Ultraschallsensorsystems 10 ausgebildet ist.

Das Ultraschallsensorsystem 10 gemäß der vorliegenden Erfindung kann z.B. einen Ultraschallsender 11, einen Ultraschallsender 12 und eine Steuereinrichtung 15 zum Steuern des Betriebs des Ultraschallsensorsystems 10 aufweisen.

Es können auch mehrere Ultraschallsender 11 und/oder mehrere Ultraschallempfänger 12 ausgebildet sein.

Über ein oder mehrere Erfassungs- und Steuerleitungen 14 sind die Steuereinrichtung 15 und der eine oder die mehreren Ultraschallsender 11 und/oder der eine oder die mehreren Ultraschallempfänger 12 miteinander verbunden.

Auf diese Weise kann die Steuereinrichtung 15 jeweils den Betrieb der Sender 11 und der Empfänger 12 steuern und/oder deren Status abfragen bzw. entsprechende Daten oder Signale von den Sendern 11 und/oder den Empfängern 12 empfangen oder aktiv abrufen.

Die Steuereinrichtung 15 ist ausgebildet und weist Mittel auf, die sowohl den Betrieb des Sendens über die Ultraschallsender 11 als auch den Empfang über die Ultraschallempfänger 12 in der erfindungsgemäßen Art und Weise ermöglichen.

Dazu können entsprechende Mittel zum Speichern, Verarbeiten und Bewerten empfangener Signale vorgesehen sein, die hier im Detail nicht dargestellt sind.

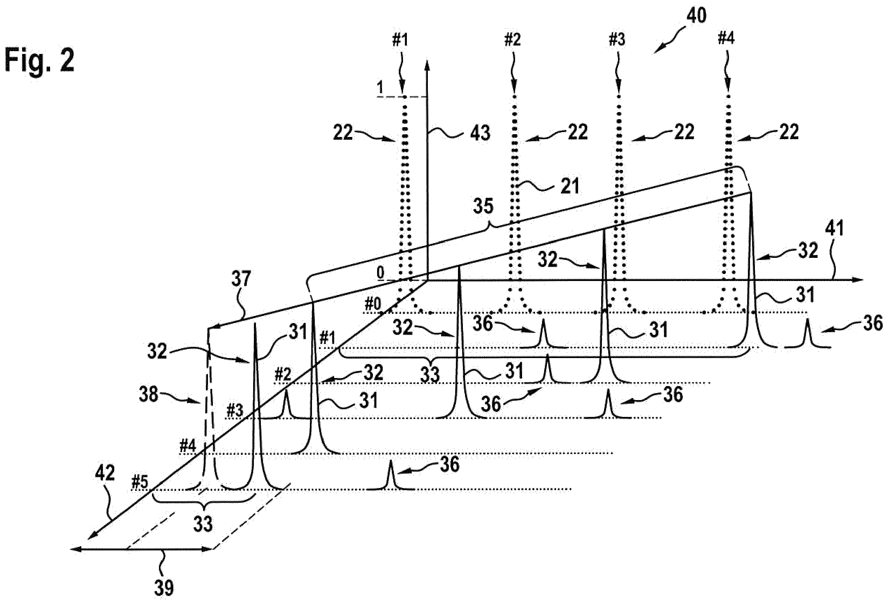

Figur 2 zeigt nach Art eines dreidimensionalen Grafen 40 eine typische Messsituation, wie sie beim erfindungsgemäßen Betriebsverfahren für ein Ultraschallsensorsystem 10 zu Grunde gelegt werden kann.

Im Grafen 40 ist entlang einer ersten Abszisse 41 (x-Achse) die Messzeit aufgetragen.

Entlang der zweiten Abszisse 42 (y-Achse) wird gemäß der mit einem Ultraschallsignal 20 als Sendesignal im Zusammenhang stehenden einzelnen Pulsen oder Sendepulsen 22 durchnummeriert, und zwar aufeinanderfolgend mit #1, #2 usw.

An der Ordinate 43 sind die relativen Ultraschallintensitäten auf den Wert 1 normiert aufgetragen.

Bei dem auf der zweiten Abszisse 42 beim Wert 0 dargestellten Spur 21 handelt es sich also um ein Ultraschallsignal 20 als Sendesignal mit einer Mehrzahl von einzelnen Pulsen oder Sendepulsen 22, die zeitlich äquidistant, also mit konstantem zeitlichen Abstand relativ zueinander aufeinanderfolgend durch einen Ultraschallsender 11 eines Ultraschallsensorsystems 10 ausgesandt werden.

Der Einfachheit halber wird in der Umgebung 2 des Fahrzeugs 1 vom Vorhandensein eines einzigen Objekts 3 ausgegangen.

Die einzelnen Sendepulse 22 sind mit #1, #2, ... durchnummeriert.

Entsprechend den zeitlich aufeinanderfolgenden Sendepulsen 22 des Ultraschallsignals 20 als Sendesignal empfängt ein Ultraschallempfänger 12 des erfindungsgemäßen Ultraschallsensorsystems 10 ein entsprechendes Echosignal 30 als Empfangssignal, jeweils mit einer Mehrzahl von Ultraschallechos 32 und 36.

Die Spuren 31 des zu einem jeweiligen Sendepuls 22 gehörigen Echosignals 30, welches jeweils durch den Ultraschallempfänger 12 empfangen wird, sind entlang der zweiten Abszisse 42 aufsteigend mit den Nummern 1, 2, ..., aufeinanderfolgend durchnummeriert.

Die jeweiligen Spuren 31 weisen mehrere Ultraschallechos 32 und 36 auf.

Zur besseren Kenntlichmachung besitzen die eigentlichen Ultraschallechos 32 eine vergleichsweise hohe Amplitude, wogegen die weiteren Ultraschallechos 36 eine vergleichsweise niedrige Amplitude besitzen. Dadurch soll betont werden, dass die Ultraschallechos 32 von einem Objekt 3 in der Umgebung 2, die Echos 36 dagegen von einer Störung 34 herrühren.

Mit zunehmender Ordnung #1, #2, ... der zu den aufeinanderfolgenden Sendepulsen 22 - ebenfalls durchnummeriert mit #1, #2, ... - also mit zunehmender Sendezeit für die Sendepulse 22 die zugehörigen Ultraschallechos 32, welche zum Objekt 3 in der Umgebung 2 gehören, näher an die zweite Abszisse 42 heranreichen, entsprechend einem sich mit verstreichender Zeit verringerndem Distanzwert 33. Der Distanzwert 33 ist in diesem Fall gerade repräsentativ für den zeitlichen Abstand des jeweiligen Ultraschallechos 32 von der zweiten Abszisse 42 und entsprechend repräsentativ für die Laufzeit des reflektierten Signals, also des Ultraschallechos 32 vom reflektierendem Objekt 3 bis zum Ultraschallempfänger 12.

Dies bedeutet im Umkehrschluss, dass sich der räumliche Abstand zwischen dem Ultraschallsensorsystem 10, also dem Fahrzeug 1, und dem Objekt 3 in der Umgebung 2 zeitlich ändert, das Objekt 3 und das Fahrzeug 1 bewegen sich relativ zueinander.

Erfindungsgemäß wird nun aus der Mehrzahl der Spuren 31 korrespondierend zu den einzelnen Sendeimpulse 22 und durchnummeriert mit #1, #2, ..., eine Zuordnung der Ultraschallechos 32 zu einer Gruppe 35 durchgeführt.

Dazu werden die Empfangszeiten, zeitlichen Positionen oder Lagen der mit #1, #2, ..., durchnummerierten Ultraschallechos 32 auf der Grundlage einer vorbestimmten Gesetzmäßigkeit bewertet.

Die Zugehörigkeit der Ultraschallpulse 32, Gruppe 35, wird in Figur 2 durch die Koinzidenzlinie 37, die auch als Trace 37 bezeichnet wird und als Übereinstimmungsmerkmal in Bezug auf die Lage der Ultraschallechos 32 dient, angedeutet. Statt einer Linie kann auch ein Intervall mit einer gewissen Streubreite verwendet werden.

Wie oben bereits im Detail dargelegt wurde, wird unter einer Gruppe 35 und unter einer Trace 37 synonym jeweils eine Zusammenfassung von Ultraschallechos in Echosignalen oder Empfangssignalen zu zeitlich voneinander beabstandeten Ultraschallsignalen als Sendesignalen oder zu deren zeitlich beabstandeten Pulsen als Sendepulse verstanden, wobei jeweils die zu Grunde gelegte vorbestimmte Gesetzmäßigkeit maßgeblich ist.

Ausgehend von der so erzeugten Gruppe 35 oder Trace 37 und der zu Grunde gelegten vorbestimmten Gesetzmäßigkeit kann dann für zukünftige Folgesignale

- also für in der Zukunft liegende weitere Sendepuls 22 des Ultraschallsignals 20
- ein zukünftiges Ultraschallecho 38 vorhergesagt werden.

Trifft dann, durch einen weiteren Sendepuls 22 angeregt, ein derartiges weiteres Ultraschallecho 32 - in der Figur mit der Nummer #5 versehen - ein, so kann innerhalb des Fangfensters 39, also des oben beschriebenen Koinzidenzintervalls 37 bzw. der Trace 37, festgestellt werden, ob die Lage des bei #5 vorliegenden neuen Ultraschallechos 32 auf der Grundlage der vorbestimmten Gesetzmäßigkeit sich noch in die Gruppe 35 der vorangehenden Ultraschallechos 32 eingliedern lässt oder nicht.

Zu bemerken ist noch, dass eine entsprechende Gesetzmäßigkeit für die weiteren Ultraschallechos 36 - hier mit kleinerer Amplitude - nicht gefunden werden kann, so dass diese zusätzlichen Ultraschallechos 36 als zu einer Störung 34 gehörig klassifiziert und bei der Objektbehandlung ausgeschlossen werden.

In Figur 2 weisen die Pulse 22 als Sendepulse des Ultraschallsignals 20 als Sendesignal einen konstanten zeitlichen Abstand zueinander auf. Üblicherweise wird dieser bei konkreten Anwendungen, gerade beim Vorliegen einer Mehrzahl von Ultraschallsendern/-empfängern so gewählt, dass unter Berücksichtigung der Schallgeschwindigkeit und der Dämpfung im jeweils relevanten Frequenzbereich kein zeitlicher Überlapp der Sendepulse 22 zueinander und in Bezug auf von etwaigen Objekten 3 einlaufenden Ultraschallechos 32 vorliegt. Dies bedeutet insbesondere, dass mit dem Aussenden eines Pulses 22 bei einem gegebenen Ultraschallsender 11 solange gewartet wird, bis sämtliche erwartbaren Ultraschallechos 32 zu vorangehenden Sendepulsen 22 sämtlicher Ultraschallsender 11 eingelaufen sind. Damit ergibt sich zum Beispiel ein Zeitfenster zwischen 10 ms und 140 ms zwischen aufeinanderfolgenden Sendepulsen 22 eines gegebenen Ultraschallsender 11, auch in Abhängigkeit von der Fahrgeschwindigkeit und/oder der Struktur der Umgebung. Der Einfachheit halber ist ihre Darstellung gemäß Figur 2 das Vermeiden eines derartigen zeitlichen Überlappens nicht realisiert, kann aber als grundsätzliche Maßnahme der vorliegenden Erfindung verwirklicht sein.

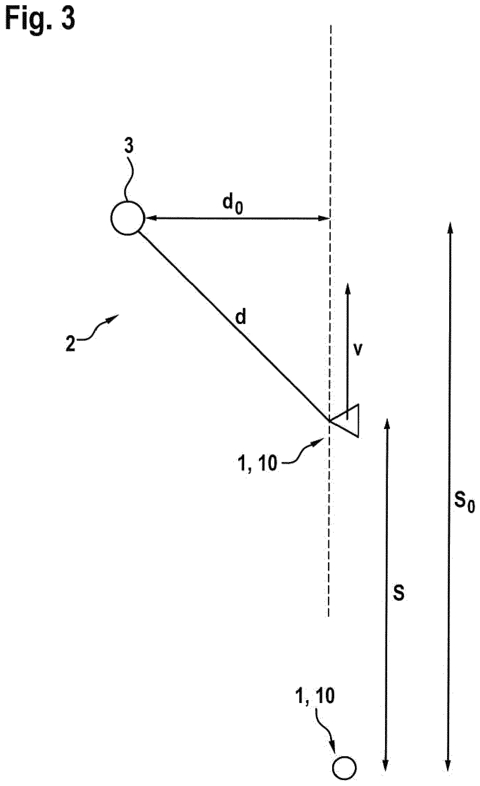

Figur 3 erläutert in schematischer Draufsicht die bei dem erfindungsgemäßen Betriebsverfahren zu Grunde liegenden geometrischen Verhältnisse.

Dabei werden mit d der Distanzwert, mit $d_0$ ein minimaler Abstand des zu Grunde liegenden Fahrzeugs 1 oder zumindest des Sendersystems 10 von einem Objekt 3, mit s eine zurückgelegte Wegstrecke und mit $s_0$ eine zurückgelegte Wegstrecke zu einem Zeitpunkt des Passierens des Fahrzeugs 1 oder des Ultraschallsensorsystems 10 am Objekt 3 bezeichnet.

Die so definierten Größen können der Bewertung durch die oben dargelegten Zusammenhänge (I) und (II) verwendet werden oder als Größen in einer Korrelationsanalyse, z.B. auf der Grundlage eines diskreten Kalmanfilters mit den unten weiter im Detail beschriebenen Beziehungen (III) bis (VI) eingehen.

Diese und weitere Merkmale und Eigenschaften der vorliegenden Erfindung werden an Hand der folgenden Darlegungen weiter erläutert:

Mit der Entwicklung moderner Ultraschalltechnologie entstehen zunehmend sensitive Sensoren mit großer Reichweite, mit denen auch schlecht reflektierende Objekte zuverlässig erkannt werden können.

Im Wesentlichen geht es bei modernen Entwicklungen um Fußgänger, um Objekte in Bewegung im Allgemeinen, um Objekte mit sehr geringem Durchmesser oder Abmessungen im Allgemeinen und um kleine Objekte in der Nähe von sehr großen und gut reflektierenden Objekten. Diese können auch bei starken äußeren Einflüssen wie Fremdschall oder Bodenclutter mit modernen Sensortechnologien an sich noch zuverlässig erkannt werden.

Zudem sind moderne Ultraschallsensoren in der Lage, bis zu 20 Reflexionen in einem Sendezyklus zu liefern. Ein negativer, aber in Kauf genommener Nebeneffekt, ist die hohe Rate an Geisterechos, die auf der Softwareebene wieder herausgefiltert werden müssen.

Herkömmliche Ultraschallsysteme filtern Echos im Sensor anhand von festen Intensität- oder Amplitudenschwellwerten. Diese Schwellenwerte sind so eingestellt, dass auch auf Schlechtwegstrecken die Zahl der Störechos ausreichend gering ist.

Dennoch wird auch bei diesen herkömmlichen Systemen vorausgesetzt, dass ein Objekt über mehrere Messungen hintereinander erkannt wird. Dies erfolgt konkret dadurch, dass mehrere Messungen in Folge Distanzwerte liefern, die einander ähnlich genug sind.

In diesen herkömmlichen Systemen kommen allerdings einfache Prinzipien zur Anwendung, die nicht den Verlauf einer längeren Echohistorie berücksichtigen und damit vorwiegend für statische Situationen ohne bewegte Objekte geeignet sind.

Ein zentrales Element der vorliegenden Erfindung ist die Ausgestaltung einer Ultraschallsensoranordnung 10 - insbesondere im Zusammenhang mit einer vorgesehenen Filterkette - ein neues entwickeltes Filterverfahren, welches auf die eingehenden und empfangenen Echosignale 30 und deren Ultraschallechos 32 sowie neben Echos 36 angewandt wird.

Dieses neue Filterverfahren wird nachfolgend auch als Echotracing bezeichnet, womit Ausgestaltungsformen des erfindungsgemäßen Betriebsverfahrens für ein Ultraschallsensorsystem 10 umschrieben werden.

Das Echotracing ist als Filterverfahren dazu ausgebildet, im Echosignal 30 oder in einer Abfolge von Echosignalen 30 zu zeitlich aufeinanderfolgenden Sendepulsen 22 eines ausgesandten Ultraschallsignals 20 als Sendesignal nach zeitlichen Verläufen im Echobild, also der zeitlichen Abfolge der einlaufenden Ultraschallechos 32 in Bezug aufeinander, zu suchen.

Erfindungsgemäß ist das Verfahren in der Lage, Echosignale 36 zu einzelnen Störungen 34 von Ultraschallechos 32 zu stabilen Detektionen eines Objektes 3 in einer Umgebung 2 zu unterscheiden.

Dies ist besonders wichtig, da z.B. ein Pfosten als Objekt 3 im Nahbereich der Umgebung zum Beispiel zwischen zwei Sensoren oder Ultraschallempfängern 12 nur noch sehr kleine Amplituden aufweist und sonst nicht mehr von einer Störung 34 unterscheidbar wäre.

Zusätzlich können die durch das Echotracing gelieferten Reflexionsverläufe die Basis vieler neu entwickelter Funktionen der Umfelderkennung bilden, z.B. im Hinblick auf das Erkennen dynamischer, also bewegter Objekte und/oder eine Höhenklassifikation.

Zusätzlich erleichtert die Bewertung von Reflexionsverläufen im Sinne des erfindungsgemäßen Echotracings im Gegensatz zur Bewertung von zeitlich isolierten Einzelreflexionen die Echozuordnung im Verfahren der Lateration der Objektlokalisierung, wodurch eine wesentliche Verbesserung der Objektbildung erreicht wird.

Nachfolgend werden mit anderen Worten Aspekte des Kerns und der Vorteile der Erfindung beschrieben:

Das Echotracingverfahren als erfindungsgemäßes Betriebsverfahren für ein Ultraschallsensorsystem 10 dient dazu, über eine Sequenz zeitlich aufeinanderfolgender Messungen Echos 32 zu identifizieren, die von demselben Objekt 3 stammen und diese zu gruppieren, also zu einer zeitlich übergreifenden Gruppe 35 zwischen zeitlich aufeinanderfolgenden Spuren 31 im Echosignal 30 zusammenzufassen.

Dies kann insbesondere durch das Auffinden und bewerten einer Gesetzmäßigkeit und/oder Gleichmäßigkeit der Distanzfolge - also der Folge aufeinanderfolgender Distanzwerte - bewertet werden, die sich zum Beispiel auch linear oder quadratisch verhalten können.

Des Weiteren ist es erfindungsgemäß möglich, die Distanzfolge alternativ oder zusätzlich anhand von weiteren Kriterien zu bewerten.

Dazu können die Ähnlichkeit in der Reflektivität oder der Korrelation der empfangenen Echos herangezogen werden.

Sind nun auf diese Weise Echos 32 zu einer Gruppe 35 zusammengefasst oder gruppiert, dann können Echos 36, die keiner Gruppe 35 zugeordnet werden konnten, zum Beispiel als von einer Störung 34 stammend gelöscht werden.

Insbesondere statistisch verteilte Störechos, z.B. Bodenclutter, Rauschen, Störer von Fremdsystemen und anderen externen, akustischen Quellen, weisen keine Gesetz-, Regel- oder Gleichmäßigkeit in ihrem historischen Verlauf auf und können auf diese Weise zuverlässig herausgefiltert werden.

Ein weiterer Vorteil der Erfindung ist die Möglichkeit, sehr schwache Reflexe als Ultraschallechos 32 auszuwerten, indem sie genau dann zur Bildung und Bewertung von Objekten 3 herangezogen werden, wenn ausreichend viele in einer Sequenz von Messungen - also zu unterschiedlichen Sendepulsen 22 des zu Grunde liegenden Ultraschallsignals 20 - erkannt wurden, die einem sendepulsübergreifenden Gruppe 35 oder Trace 37 zugeordnet werden können.

Das ist insbesondere bei Fußgängern als Objekten 3 wesentlich, die üblicherweise nur wenig Schallenergie reflektieren.

Ferner ist erfindungsgemäß die Möglichkeit vorteilhaft, bewegte Objekte 3 auch bis zu einer relativ hohen Eigengeschwindigkeit stabil zu verfolgen und Bewegungsvektoren abzuleiten. Auch das ist wesentlich für Fußgänger als Objekte 3, weil diese mobil sind.

Ferner ergibt sich erfindungsgemäß die Möglichkeit, über sich kreuzende Echoverläufe zu erkennen, wenn sich die Reflexionen zweier Objekte 3 auf demselben oder einem ähnlichen Abstandswert oder Distanzwert 33 überlagern.

Ein weiterer erfindungsgemäß erreichter Vorteil ist die Verbesserung der Robustheit der Bildung oder Detektion von Objekten 3 dadurch, dass eine sendepulsübergreifende Zuordnung von Echos 32 zu Gruppen 35 oder Traces 37 zur Beschreibung einer Koinzidenz ausgewendet werden.

Dies kann auch als Kriterium dafür dienen, welche Echodaten miteinander für eine Triangulation oder Lateration kombiniert werden.

Konkret kann dann, wenn in einem Zeitschritt t die Trace ti zu einer Gruppe 35 von einem Sensor i mit der Trace tj zu einer Gruppe 35 von Sensor j trianguliert wurde, in einem späteren Zeitschritt t+1 davon ausgegangen werden, dass immer noch dieselben Traces 37 mithin Gruppen 35 miteinander kombiniert werden können.

Es existieren vielfältige Lösungsmöglichkeiten für das erfindungsgemäße Echotracing im Sinne eines erfindungsgemäßen Betriebsverfahrens für ein Ultraschallsensorsystem 10.

Für das Tracing bieten sich unter anderem zwei Alternativansätze an:

Der erste Ansatz bildet das Tracing mittels eines Modells der Reflexionsverläufe, im Sinne von zeitlichen Verläufen von Ultraschallechos 32 in Echosignalen 30 und deren Spur 31 in sendepulsübergreifender Weise.

Bei statischer Umgebung und sich bewegendem eigenen Fahrzeug 1 kommen einzeln oder in Kombination zwei charakteristische Detektionsverläufe vor.

Zum einen treten lineare Verläufe bezüglich Fahrzeugbewegung auf, und zwar gemäß der oben bereits erwähnten Beziehung (I)

$$\Delta d = a \cdot \Delta s , \qquad\qquad (I)$$

wobei d die gemessene Distanz und s die gefahrene Wegstrecke bezeichnen.

Ferner ist ein im Hinblick auf die Fahrzeugbewegung quadratischer Verlauf gemäß der oben bereits erwähnten Beziehung (II) denkbar, der vor allem bei Vorbeifahrt an punkförmigen Objektes 3 relevant ist:

$$d^2 = (s - s_0)^2 + d_0{}^2, \qquad (II)$$

wobei mit d die gemessene Distanz, mit s die gefahrene Wegstrecke, $s_0$ die gefahrene Wegstrecke zum Zeitpunkt des Passierens des Objektes 3 und do den minimalen Abstand zum Objekt 3 bezeichnen.

Das erfindungsgemäße Tracingverfahren sucht nun nach Echoverläufen, die auf diese Modelle oder eine Kombination davon passen.

Dabei wird zu jedem gemessenen Echo 32, 36 im nächsten Sendezyklus nach Echos in einem gewissen Fangfenster 39 zur letzten Detektion gesucht.

Das Fangfenster 39 wird initial nur durch die Eigengeschwindigkeit beeinflusst. Ab der dritten Detektion, also ab dem dritten Sendepuls 22 im Sendesignal 20, wird nun geprüft, zu welchem Modell der sendepulsübergreifende Verlauf der Ultraschallechos 32 besser passt.

Mit diesem Modell wird dann vorausprädiziert, also ein vorhergesagtes oder zukünftiges Ultraschallecho 38 bestimmt. Das vorhergesagte Ultraschallecho 38 wird dann mit einem tatsächlich einlaufenden Ultraschallecho 32 und dessen Lage verglichen.

Vor jeder weiteren Prädiktion wird erneut das Modell geprüft. Die Größe des Fangfensters 39 hängt nun von der Modellabweichung der Echoverläufe und der Abweichung zwischen letzter Prädiktion und Messung ab.

Bei einem zusätzlichen oder alternativen Ansatz erfolgt das erfindungsgemäße Tracing mittels eines diskreten Kalmanfilters.

Dem Kalmanfilter liegt ein dreidimensionales Zustandsmodell zu Grunde. Dieses dreidimensionale Zustandsmodell weist die drei Systemzustände

$X_1$ : gemessene Distanz
$X_2$ : Änderungsrate der Distanz d oder des Distanzwerts 33
$X_3$ : Änderungsbeschleunigung der Distanz d oder des Distanzwert 33

auf.

Die Beschleunigung wird als konstant angenommen. Dabei wird eine Beobachtung von Kurven oder Bewegungen mit Kurven mit konstantem Radius gewährleistet.

Abweichungen müssen durch die Messkorrektur kompensiert werden.

Für das diskrete Zustandsmodell ergeben sich folgende Zusammenhänge (III) bis (VI):

$$X_k = F_k \cdot X_{k-1} \qquad (III)$$

$$Z_k = H \cdot X_k \qquad (IV)$$

$$F = \begin{bmatrix} 1 & dt & 0 \\ 0 & 1 & dt \\ 0 & 0 & 1 \end{bmatrix} \qquad (V)$$

$$H = \begin{bmatrix} 1 & 0 & 0 \end{bmatrix} \qquad (VI)$$

Für die Prädiktion der nächsten Messwerte wird nun ein diskretes Kalmanfilter verwendet. Die Fangfenster 39 zum Finden der Messwerte, die zur Aktualisierung der Traces 37 oder Gruppen 35 herangezogen werden, werden gemäß den Modellen für die Reflexionsverläufe auf der Grundlage der oben beschriebenen Relationen (I) und/oder (II) berechnet.

Diese und weitere Aspekte der vorliegenden Erfindung werden anhand der nachstehenden Darlegungen weiter erläutert:

Das erfindungsgemäße Betriebsverfahren für ein Ultraschallsensorsystem 10, aufgefasst als Tracingverfahren oder Echotracing, kann bei einer Ausführungsform unter anderem folgenden Verfahrensschritte (1) bis (5) aufweisen:

(1) Jedes empfangene Echo 32, 36 öffnet eine Gruppe 35 oder eine Trace 37.

(2) Im nächsten Schuss, also einer Messung zu einem zeitlich direkt nachfolgenden Sendepuls 22 wird unter Einbeziehung der Fahrzeugeigenbewegung in einem Standardfangfenster 39 nach möglichen Echos 32 zu einem Objekt 3 gesucht, die den vorherigen Schuss, also die Messung zu einem vorangehenden Sendepuls 22 hinsichtlich der dort detektierten Echos 32 zu einem Objekt 3 bestätigen können. Dabei wird beim Vorliegen einer Mehrzahl möglicher Kandidaten dasjenige Echo 32 ausgesucht, welches dem vorangehenden am nächsten kommt.

(3) Enthält eine Gruppe von 30 oder eine Trace 37 mindestens zwei Echos 32 als Kandidaten, so wird gemäß der obigen Beziehung (I) linear oder ab drei Kandidaten gemäß der obigen Beziehung (II) auch quadratisch prädiziert oder im Kalmanansatz über den Filter entschieden.

(4) Um den vorhergesagten oder prädizierten Wert 38 herum wird ein Fangfenster 39 gelegt. In Echolisten der neu gemessenen Signale wird nach Echos 32 im Fangfenster 39 gesucht. Gibt es mehrere Treffer im Sinne von möglichen Kandidaten, so wird dasjenige Echo 32 mit der geringsten Abweichung zum prädizierten Wert 38 gewählt.

(5) Die Größe oder Weite des Fangfensters 39 kann über einen Tiefpass an die mittlere Abweichung zwischen Prädiktion 38 und konkretem Messwert im Sinne eines Ultraschallechos 32 zu einem Objekt 3 angepasst werden.

Im Sinne der vorliegenden Erfindung müssen in einem Ultraschallsensorsystem die Funktionalitäten für einen Ultraschallsender 11 und für einen Ultraschallempfänger 12 nicht in getrennten Elementen realisiert sein. Vielmehr ist es denkbar, dass Ultraschallsender 11 und Ultraschallempfänger 12 in einem gemeinsamen Ultraschallsendeempfangselement vereint sind und dass gegebenenfalls mehrere Ultraschallsendeempfangselemente verwendet werden und vorgesehen sind.

**Patentansprüche**

1.  Betriebsverfahren für ein Ultraschallsensorsystem (10), insbesondere zur Erfassung der Umgebung (2) eines Fahrzeugs (1) mittels Ultraschall,
    mit den Schritten:

    - Aussenden von Ultraschallsignalen (20) zu einer Mehrzahl aufeinanderfolgender Zeitpunkte und
    - Empfangen von - insbesondere an einem oder an mehreren Objekten (3) in der Umgebung (2) - reflektierten Ultraschallechosignalen (30),

    wobei:

    - einem - zu einem ausgesandten Ultraschallsignal (20) - empfangenen Ultraschallechosignal (30) eine Spur (31) zugeordnet wird, insbesondere eine gemessene Schallintensität als Funktion der Zeit,
    - in einer jeweiligen Spur (31) zu einem jeweils vorhandenen Ultraschallecho (32) ein Distanzwert (33) bestimmt und zugeordnet wird,
    - Ultraschallechos (32) in Spuren (31) zu einer Mehrzahl zeitlich aufeinanderfolgender Ultraschallsignale (20) zu einer Gruppe (35) zusammengefasst werden, falls die Distanzwerte der Ultraschallechos (32) einer vorbestimmten Gesetzmäßigkeit folgen, und
    - Ultraschallechos (36), die zu keiner Gruppe (35) gehören, als Störung (34) klassifiziert werden.

2.  Betriebsverfahren nach Anspruch 1,
    bei welchem ein jeweiliger Distanzwert (33) unter Berücksichtigung einer Eigenbewegung eines zu Grunde liegenden Ultraschallsenders (11) des Ultraschallsensorsystems (10) und insbesondere des mit dem Ultraschallsensorsystem (10) ausgestatteten zu Grunde liegenden Fahrzeugs (1) bestimmt wird.

3.  Betriebsverfahren nach einem der vorangehenden Ansprüche,

bei welchem die vorbestimmte Gesetzmäßigkeit definiert ist durch einen linearen Zusammenhang zwischen einem jeweiligen Distanzwert (33) und einer vom Ultraschallsensorsystem (10) und insbesondere vom zu Grunde liegenden Fahrzeug (1) zurückgelegten Wegstrecke, insbesondere gemäß der nachfolgenden Gleichung (I)

$$\Delta d = a \cdot \Delta s \,, \qquad\qquad (I)$$

wobei $\Delta d$ die Differenz von Distanzwerten d zu verschiedenen Zeitpunkten oder Spuren (31), $\Delta s$ die Differenz der zurückgelegten Wegstrecke s zu diesen verschiedenen Zeitpunkten oder Spuren (31) und a eine Konstante bezeichnen, insbesondere beim Vorliegen von mindestens zwei Ultraschallechos (32) in einer Gruppe (35) und/oder in einer Spur (31).

4.  Betriebsverfahren nach einem der vorangehenden Ansprüche,
    bei welchem die vorbestimmte Gesetzmäßigkeit definiert ist durch einen quadratischen Zusammenhang zwischen einem jeweiligen Distanzwert (33) und einer vom Ultraschallsensorsystem (10) und insbesondere vom zu Grunde liegenden Fahrzeug (1) zurückgelegten Wegstrecke, insbesondere gemäß der nachfolgenden Gleichung (II)

$$d^2 = \left(s - s_0\right)^2 + d_0{}^2 \,, \qquad\qquad (II)$$

wobei d den Distanzwert, do einen minimalen Abstand zu einem Objekt (3), s die zurückgelegte Wegstreck und $s_0$ die zurückgelegte Wegstrecke zu einem Zeitpunkt des Passierens des Objekts (3) bezeichnen, insbesondere beim Vorliegen von mehr als zwei Ultraschallechos (32) in einer Gruppe (35) und/oder in einer Spur (31).

5.  Betriebsverfahren nach einem der vorangehenden Ansprüche,
    bei welchem die vorbestimmte Gesetzmäßigkeit definiert ist durch einen Korrelationszusammenhang von Ultraschallechos (32) und/oder eine Ähnlichkeit der Reflexion oder Reflexivität im Zusammenhang mit Ultraschallechos (32).

6.  Betriebsverfahren nach einem der vorangehenden Ansprüche,
    bei welchem die vorbestimmte Gesetzmäßigkeit definiert ist durch einen Korrelationszusammenhang von Ultraschallechos (32) über eine Filterfunktion, insbesondere auf der Grundlage eines diskreten Kalmanfilters und/oder beim Vorliegen von mehr als zwei Ultraschallechos (32) in einer Gruppe (35) und/oder in einer Spur (31).

7.  Betriebsverfahren nach einem der vorangehenden Ansprüche,
    bei welchem zur Bewertung jeweiliger Echosignale (30), Spuren (31), Ultraschallechos (32), Distanzwerte (33) und/oder Gruppen (35) von Ultraschallechos (32), insbesondere zu verschiedenen Zeitpunkten und/oder zu verschiedenen Sendepulsen (22) des zu Grunde liegenden Ultraschallsignals (20), ein Fangfenster (39) definiert und verwendet wird.

8.  Betriebsverfahren nach Anspruch 7,

    - bei welchem in einer Spur (31) eines empfangenen Ultraschallechosignals (30) zu einem später ausgesandten Ultraschallsignal (20) oder Sendepuls (22), insbesondere unter Einbeziehung einer Eigenbewegung des zu Grunde liegenden Ultraschallsensorsystems (10) und/oder des zu Grunde liegenden Fahrzeugs (1), in einem Fangfenster nach möglichen Ultraschallechos (32) gesucht wird, welche Ultraschallechos (32) in einer Spur (31) eines empfangenen Ultraschallechosignals (30) zu einem früher ausgesandten Ultraschallsignal (20) oder Sendepuls (22) bestätigen,
    - wobei insbesondere ein Ultraschallecho (32) bestimmt und verwendet wird, welches dem vorangehenden Ultraschallecho (32) am nächsten kommt.

9.  Betriebsverfahren nach einem der vorangehenden Ansprüche, bei welchem

    - zur Bewertung einer Spur (31) eines empfangenen Ultraschallechosignals (30) zu einem später ausgesandten Ultraschallsignal (20) oder Sendepuls (22) für den späteren Zeitpunkt ein bereits definiertes Fangfenster verwendet wird, um unter Verwendung der vorbestimmten Gesetzmäßigkeit für eine gegebene Gruppe (35) für den späteren Zeitpunkt eine Lage eines zukünftigen Ultraschallechos (38) vorherzusagen, und

- dasjenige Ultraschallecho (32) in der Spur (31) des Ultraschallechosignals (30) zum späteren Zeitpunkt zur jeweiligen Gruppe (35) hinzugefügt wird, welches der vorhergesagten Lage des zukünftigen Ultraschallechos (38) am nächsten kommt.

10. Betriebsverfahren nach einem der vorangehenden Ansprüche,
bei welchem ein jeweiliges Fangfenster (39) über einen Tiefpassfilter an eine mittlere Abweichung zwischen einer vorhergesagten Lage eines zukünftigen Ultraschallechos (38) und einer tatsächlichen Lage eines in eine Gruppe (35) aufgenommenen Ultraschallechos (32) in einer Spur (31) eines Ultraschallechosignals (30) angepasst wird.

11. Steuereinrichtung (15) zum Steuern des Betriebs eines Ultraschallsensorsystem (10), insbesondere zur Erfassung der Umgebung (2) eines Fahrzeugs (1) mittels Ultraschall, welches zur Ausführung eines Betriebsverfahrens nach einem der vorangehenden Ansprüche ausgebildet ist.

12. Ultraschallsensorsystem (10), insbesondere zur Erfassung der Umgebung (2) eines Fahrzeugs (1) mittels Ultraschall, mit:

- einem Ultraschallsender (11),
- einem Ultraschallempfänger (12) und
- einer Steuereinrichtung (15) nach Anspruch 11.

13. Fahrzeug (1), insbesondere Personenkraftwagen, welches mit einem Ultraschallsensorsystem (10) nach Anspruch 12 ausgebildet ist.

# Fig. 1

Fig. 2

**Fig. 3**

Europäisches
Patentamt

European
Patent Office

Office européen
des brevets

**EUROPÄISCHER RECHERCHENBERICHT**

Nummer der Anmeldung

EP 17 18 6661

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2016/054430 A1 (PALUSZEK MICHAEL A [US] ET AL) 25. Februar 2016 (2016-02-25) | 1-13 | INV. G01S15/93 |
| Y | * Absätze [0018] - [0023]; Anspruch 5; Abbildung 1 * <br> * Absätze [0067], [0068]; Abbildung 4 * | 2-4 | G01S7/539 G01S15/58 G01S15/66 G01S15/87 |
| | ----- | | |
| X,P | EP 3 156 820 A1 (VALEO SCHALTER & SENSOREN GMBH [DE]) 19. April 2017 (2017-04-19) * Absätze [0007], [0008], [0009], [0109] - [0187]; Abbildungen 6, 7 * | 1,6-9, 11-13 | |
| | ----- | | |
| Y | DE 10 2015 219551 A1 (DENSO CORP [JP]; TOYOTA MOTOR CO LTD [JP]) 28. April 2016 (2016-04-28) * Absätze [0012] - [0018], [0126]; Abbildung 4 * | 2-4 | |
| | ----- | | |

RECHERCHIERTE
SACHGEBIETE (IPC)

G01S

Der vorliegende Recherchenbericht wurde für alle Patentansprüche erstellt

| Recherchenort | Abschlußdatum der Recherche | Prüfer |
|---|---|---|
| München | 8. Februar 2018 | Schmelz, Christian |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 17 18 6661

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

08-02-2018

| Im Recherchenbericht angeführtes Patentdokument | Datum der Veröffentlichung | Mitglied(er) der Patentfamilie | Datum der Veröffentlichung |
|---|---|---|---|
| US 2016054430 A1 | 25-02-2016 | KEINE | |
| EP 3156820 A1 | 19-04-2017 | DE 102015117379 A1<br>EP 3156820 A1 | 13-04-2017<br>19-04-2017 |
| DE 102015219551 A1 | 28-04-2016 | CN 105539437 A<br>DE 102015219551 A1<br>JP 2016080646 A<br>US 2016116589 A1 | 04-05-2016<br>28-04-2016<br>16-05-2016<br>28-04-2016 |

EPO FORM P0461

Für nähere Einzelheiten zu diesem Anhang : siehe Amtsblatt des Europäischen Patentamts, Nr.12/82